# EUROPEAN PATENT SPECIFICATION

(11) **EP 0 474 413 B1**
(45) Date of publication and mention of the grant of the patent: **26.06.1996**
(21) Application number: 91307779.8
(22) Date of filing: 23.08.1991
(51) Int. Cl.: C09K 3/32, C11D 3/18

(54) **Oil shoreline chemical cleaner**
Chemischer Reiniger für ölverschmutzte Küsten
Nettoyant chimique pour l'huile déversée sur le littoral

(30) Priority: 07.09.1990 US 578481
(43) Date of publication of application: 11.03.1992
(73) Proprietor: EXXON RESEARCH AND ENGINEERING COMPANY, Florham Park, New Jersey 07932-0390 (US)
(72) Inventor: Bock, Jan, Brigdewater, New Jersey 08807 (US); Canevari, Gerard Paul, Cranford, New Jersey 07016 (US); Fiocco, Robert John, Summit, New Jersey 07901 (US); Robbins, Max Leo, South Orange, New Jersey 07079 (US); Becker, Kenneth William, Houston, Texas 77077 (US); Coker, Larry Gene, Deceased (US)
(74) Representative: Fletcher Watts, Susan J.

(56) References cited:
- EP-A- 401 050
- EP-A- 0 254 704
- FR-A- 2 479 251
- US-A- 4 764 285
- Patent Abstracts of Japan (Nitto) 16 June 1977 & JP-A-52 072 369

## Description

The present invention relates to a surfactant blend composition and a process for the removal of oil deposited on an article or the earthen formation of a shoreline which is abutted from a body of fresh water or sea water.

There have been extensive use of cleaning aids/detergents/dispersants for the cleanup of oiled shoreline particularly rock surface. While these agents have been effective, such as the use of COREXIT 8666 to clean 200 miles of shoreline in TAMPA BAY, they released the removed oil in a finely dispersed state into a receiving water body. Although the dispersed oil plume will reduce in concentration in time, there is considerable concern and strong opposition to the use of dispersants which do not allow recovery of the oil. This is based on the premise that once beached, the spilled oil is trapped on the shoreline and is no longer a threat to the marine species in the open body of water. Dispersing it after cleaning reintroduces oil in the near shore environment.

However, non-chemical means to clean shorelines have been found to be labor intensive, physically disruptive to the area and marginally effective at best. In order to resolve this, a formulation of wetting agents has been developed that while effectively removing oil from and making the rock surface water wetted, does not disperse the oil into fine droplets. Rather, the removed oil, after being cleansed from the rock surface, maintains itself as an intact cohesive volume of oil. In this physical state, it can readily be mechanically recovered by conventional skimming equipment. This chemical means of cleaning oil coated rocky shorelines has been shown to be better than wash water alone or other conventional mechanical means.

Another limitation of current shoreline cleanup approaches is that oil which has penetrated some distance below the upper surface layer is not effectively removed. This subsequently leads to a re-oiling of the upper surface layer as the tide comes in and promotes upward movement of the oil from below the upper surface.

Numerous U.S. Patents have taught methods for treating oil slicks on water, but these are non-applicable to the removal of oil already deposited on a shoreline. The U.S. Patents are: U.S. Patent Nos. 3,457,168; 3,577,340; 3,625,857; 3,639,255; 3,810,835; 4,098,694; 4,110,213; 4,197,197; 4,469,603; 4,597,893; and 4,623,468. Several British patents, such as GB 1,255,394 and 1,404,684, also teach the use of dispersants for treating oil slicks on water.

U.S. Patent 4,224,152 teaches a method of pretreating a beach to prevent oil from being deposited on the beach, but fails to teach a method for removal of the oil from the beach after the oil has been deposited on the beach.

EP-A-0 401 050, of earlier priority date, describes similarly to the present application a process for the removal of oil deposited on the earthen formation of a shoreline utilising a surfactant solution. The present invention employs different solvent.

US-A-5,051,192 describes compositions for dispersing oil slicks on water comprising a solution of surface active agents in a mixture of viscosity modifier, water, and a hydrocarbon solvent. The surface active agents are a mixture of emulsifying agents and wetting agent. Each such mixture comprises two blends having HLBs respectively of 8.5-9.5 and 8-10. Each blend may have individual surfactants of lower or higher HLB, e.g. 4.3 and 15. As will become apparent, the present invention is directed to solutions of surfactants having specified solvents and which do not disperse oil slicks but rather remove the oil in a form which can be collected.

World Patent Index abstract, accession no. 77-53369Y (JP-A-52072369) describes the removal of sludge stuck to the bottom of a tank utilising a solution of two types of surfactants (I) and (II) in crude petroleum oil or heavy oil. (I) is e.g. a condensate of a polyoxyalkylene alkyl aryl ether with e.g. formaldehyde and (II) is a sulphonate, e.g., a dialkyl sulphosuccinate. The HLB values of the surfactants are not given and do not appear to be critical. Nor is it apparent whether or not the solutions have a dispersing effect.

The present invention teaches a process and a composition which may be used in the process for the removal of oil deposited on the rocky surface of a shoreline, wherein the oil is contacted with a solution of a mixture of surfactants for a sufficient period of time to permit penetration of the surfactant into the oil-soaked layer which can range down to several centimetres or more in depth. The oil containing the penetrated surfactant solution is subsequently washed with water and the surfactant solution and oil are washed into a body of water abutting the shoreline, wherein the oil and surfactants form a cohesive volume in the form of lenses of oil, or a coherent oil film on the surface of the body of water. The oil may be mechanically removed from the surface of the body of water by conventional booming and skimming techniques.

In one aspect the present invention provides a surfactant solution of a first surfactant having an hydrophilic-lipophilic balance (HLB) of from 1 to 5 and a second surfactant having an HLB of from 12 to 15 dissolved in a paraffinic, isoparaffinic, or naphthenic hydrocarbon solvent, the mixture of the first surfactant and the second surfactant having an HLB of from 8 to 10.5, wherein the solution has from 2.0 to 60.0 wt.% of the mixture of the first and second surfactants, wherein the weight ratio for the first surfactant to the second surfactant is from 65.35 to from 40:60, and wherein the hydrocarbon solvent is selected from "VARSOL 18", low odour paraffinic solvent ("LOPS") , "MENTOR 28", "ISOPAR L", and "EXXSOL D 80", having the compositions defined herein.

In another aspect the present invention provides a process for the removal of oil deposited on the surface of an article which comprises the steps of:
(a) contacting the oil deposited on the surface of the article with a sufficient amount of a surfactant solution for a sufficient period of time for the surfactant solution to penetrate the oil; and
(b) washing with water the said oil and the solution of surfactants from the article;
wherein the surfactant solution is as defined above.

In a further aspect the present invention provides a process for the removal of oil deposited on the earthen formation of a shoreline which is abutted from a body of fresh water or sea water which comprises the steps of:
(a) contacting the oil deposited on the earthen formation with a sufficient amount of a surfactant solution for a sufficient period of time for the surfactant solution to penetrate the oil;
(b) washing with water the oil and solution of surfactants from the earthen formation into the body of water, the oil and the surfactant solution forming lenses or films on the surface of the body of water; and
(c) removing the films or lenses from the surface of the body of water by a mechanical process;
wherein said surfactant solution is as defined above.

In a further aspect the present invention provides a composition comprising oil and a surfactant solution as defined above.

In a further aspect the present invention concerns the use of a surfactant solution as defined above to remove an oil deposit from a surface.

The instant invention overcomes the previous difficulty of re-oiling of cleaned surface layers, when the tide comes in and displaces the difficult-to-clean sub-surface oil to the upper surface. The hydrocarbon solvent is designed to allow the proper surfactant mixture to penetrate the deep layer of oil in a reasonable time and to allow the subsequent water wash to remove the oil and prevent re-oiling of the surface layer. Additionally a very hydrophilic surfactant can be used in the post water wash to leave the rock surface water wet and reduce the tendency for re-oiling even further.

The present invention teaches a process and a composition to be used in the process for the removal of oil deposited on the rocky surface of a shoreline, wherein the oil is contacted with a solution of a mixture of surfactants in a hydrocarbon solvent for a sufficient period of time to permit penetration of the surfactant into the oil. The surfactant solution deposited on the oil is subsequently washed with water and the surfactant solution and oil are washed into a body of water abutting the shoreline, wherein the oil and surfactants form a cohesive volume in the form of oil lenses or coherent films on the surface of the body of water. The oil lenses or coherent films may be mechanically removed from the surface of the body of water by conventional booming and skimming techniques or by other mechanical means such as with an oleophilic sorbent material like a polypropylene rope or pads.

The surfactant solution of the instant invention which has an Hydrophilic-Lipophilic Balance (HLB) of 8.0 to 10.5, and more preferably about 8.5 to about 10.0 comprises a mixture of sorbitan fatty acid esters such as sorbitan monooleate (Span 80 ) and polyoxyethylene sorbitan fatty acid esters such as polyoxyethylene (20) sorbitan monooleate (Tween 80 ) dissolved in a paraffinic, aromatic, or naphthenic hydrocarbon solvent such as a de-aromatized kerosene wherein the concentration of Span 80 and Tween 80 is 2 to 60 wt.%, preferably 2 to about 30, more preferably 2 to about 20 and most preferably about 4 to about 15 for example about 10 wt%. The weight ratio of Span 80 to Tween 80 is 65:35 to 40:60, more preferably about 55:45 to about 45:55.

The surfactant mixture having an HLB of 8.0 to 10.5 and more preferably 8.5 to 10.0 is formed from a mixture of a first surfactant having an HLB of 1 to 5, more preferably about 1 to 4.3 such as Span 80 and a second surfactant having an HLB of 12 to 15 such as Tween 80.

The paraffinic, isoparaffinic or naphtenic hydrocarbon solvent, which accelerates the penetration of the surfactant mixture, is selected from Varsol 18, MENTOR 28, LOPS, ISOPAR L and Exxsol D-80, manufactured by Exxon Company USA. The above solvents are described in Table 2.

The solution of surfactants can be applied to the oil deposited on the earthen formation by a spraying process. The earthen formation includes the sand, the rock formations on the beach and any other articles deposited on the beach of the shoreline. The instant process is not limited in scope to the cleaning of shorelines but can be readily employed on an article having a layer of oil deposited thereon such as machinery, tanks, tankers, oil drilling equipment, and floors. The surfactant solution which has been sprayed on the oil is permitted to remain in contact with the oil for about 0.1 to about 4 hours, preferably about 0.2 to about 3 hours, more preferably about 0.5 to about 2 hours, and most preferably 0.2 to about 1 hour until the surfactant solution has penetrated the oil. However, in the case of thin oil layers, the time for penetration could be very short, e.g. within a few minutes.

The proportion of surfactant solution to oil being cleaned can range from 1 part of surfactant solution per 100 parts of oil up to 1 part of solution per 1 part of oil; preferably 1 part of solution per 50 parts of oil to 1 part of solution per 2 parts of oil. The amount of surfactant solution required will depend on the degree of weathering of the oil and the temperature of the oil on the shoreline.

The surfactant solution and oil are removed from the article, such as the earthen formations of a shoreline, by washing the mixture of surfactants and oil from the article with water which washes the mixture of surfactants and oil from the article. The water can be applied by a conventional spraying process or by the tide from the abutting body of water.

The oil/surfactant can be washed with fresh water, sea water or a water having a surfactant therein, wherein the surfactant has a HLB of about 13 to about 15 and the concentration of the surfactant in water is about 0.25 to about 4.0 wt.%. This wash water can be applied at ambient temperature or heated to a temperature of 43.3°C (110°F) to 60°C (140°F). Higher temperatures are preferred in terms of enhancing both the rate and extent of oil removal from the shoreline.

In the case of the removal of the oil from the earthen formation of a shoreline, the tide from the body of water will wash across the oil with the surfactant deposited therein and the oil with the surfactant therein will be washed into the body of water abutting the shoreline. The oil and surfactant which has been washed into the body of water will form as a cohesive volume in the form of oil lenses or coherent films on the surface of the body of water. The lenses or films of oil/surfactant are readily removed from the surface of the water by conventional mechanical process means such as by absorption with oleophilic solids such as polypropylene rope or by booming and skimming techniques wherein the oil/surfactant droplets, lenses, or films are skimmed off of the surface of the body of water which can be fresh water or sea water.

The invention is illustrated by the following Examples:

VARSOL, MENTOR, ISOPAR, EXXSOL, SPAN and TWEEN are trade marks.

### EXAMPLE 1: TEST PROCEDURE AND RESULTS: EFFECT OF VARIOUS SOLVENTS

Fifty grams of pre-oiled (30% topped ANS crude) aqua gravel is weighed into a wire-mesh basket forming a bed approximately 2 cm thick. In some experiments, a small additional amount of oil (e.g. 0.6 to 0.7 g) is brushed onto the surface to bring the total oil weight to 2.5 g. The rock-containing basket is cooled to 5°C. One gram of presoak chemical is sprayed onto the cold oiled rock surface. The pre-coated rocks are again refrigerated for 1 hr at 5°C. One hundred ml of flush solution, usually 3% salinity sea water at 24°C is delivered to the rock surface from a hypodermic syringe. The effluent is collected in the separatory funnel. At 1 and 5 min. from the end of the flush, 25 ml samples are collected from the separatory funnel to be analyzed for oil content. These two samples give a measure of the rate of dispersion settling and, therefore, of dispersion stability. The remaining effluent is also analyzed for oil content. The total oil content in the effluent, determined by extraction, is compared with the gravimetric measurement of the loss of oil from the rocks in order to close a material balance. This provides two independent checks of oil removal.

As the examples in Table 1 illustrate, hydrocarbon solvents which are paraffinic in nature and are low in polarity result in good oil removal and relatively low dispersion.

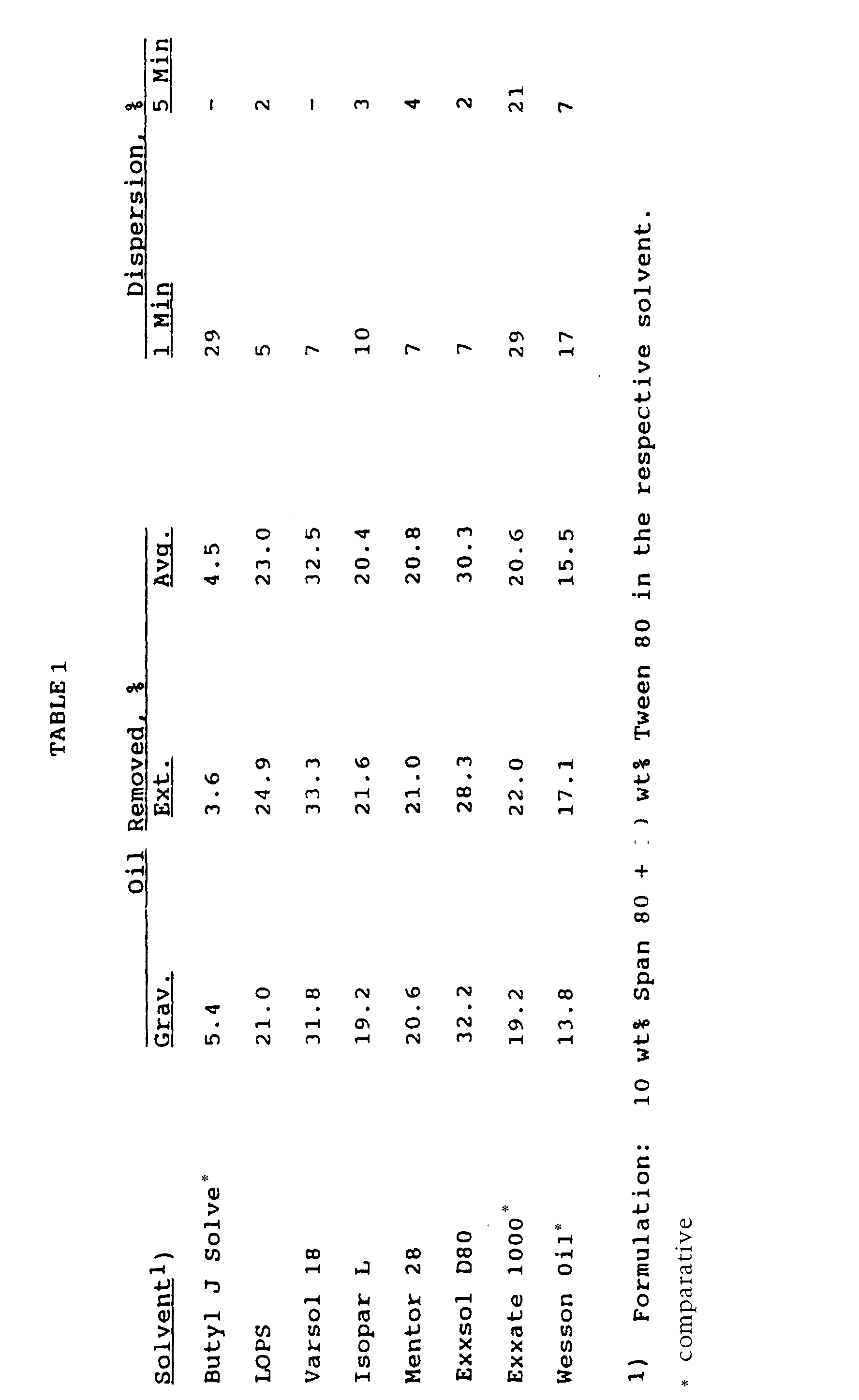

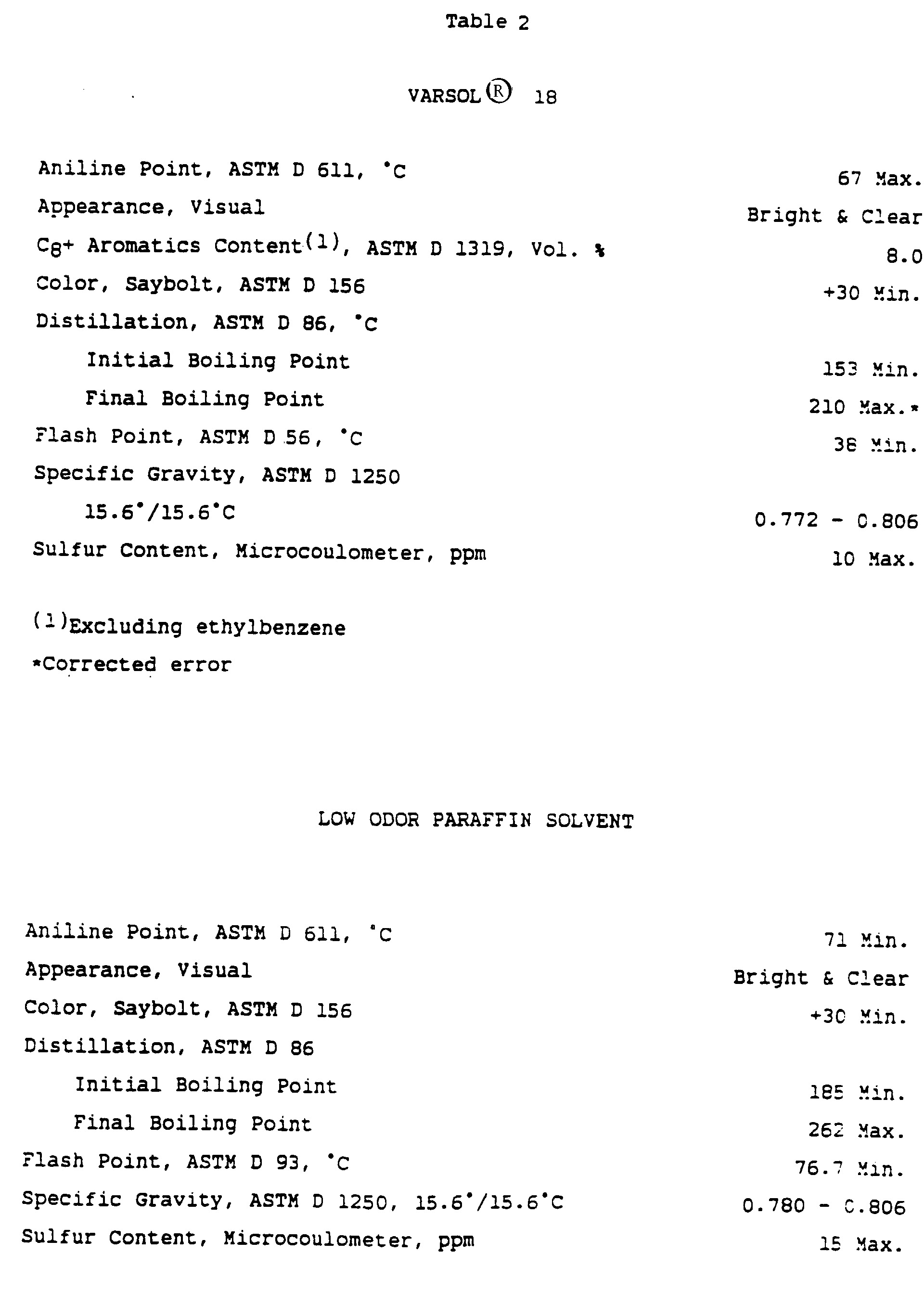

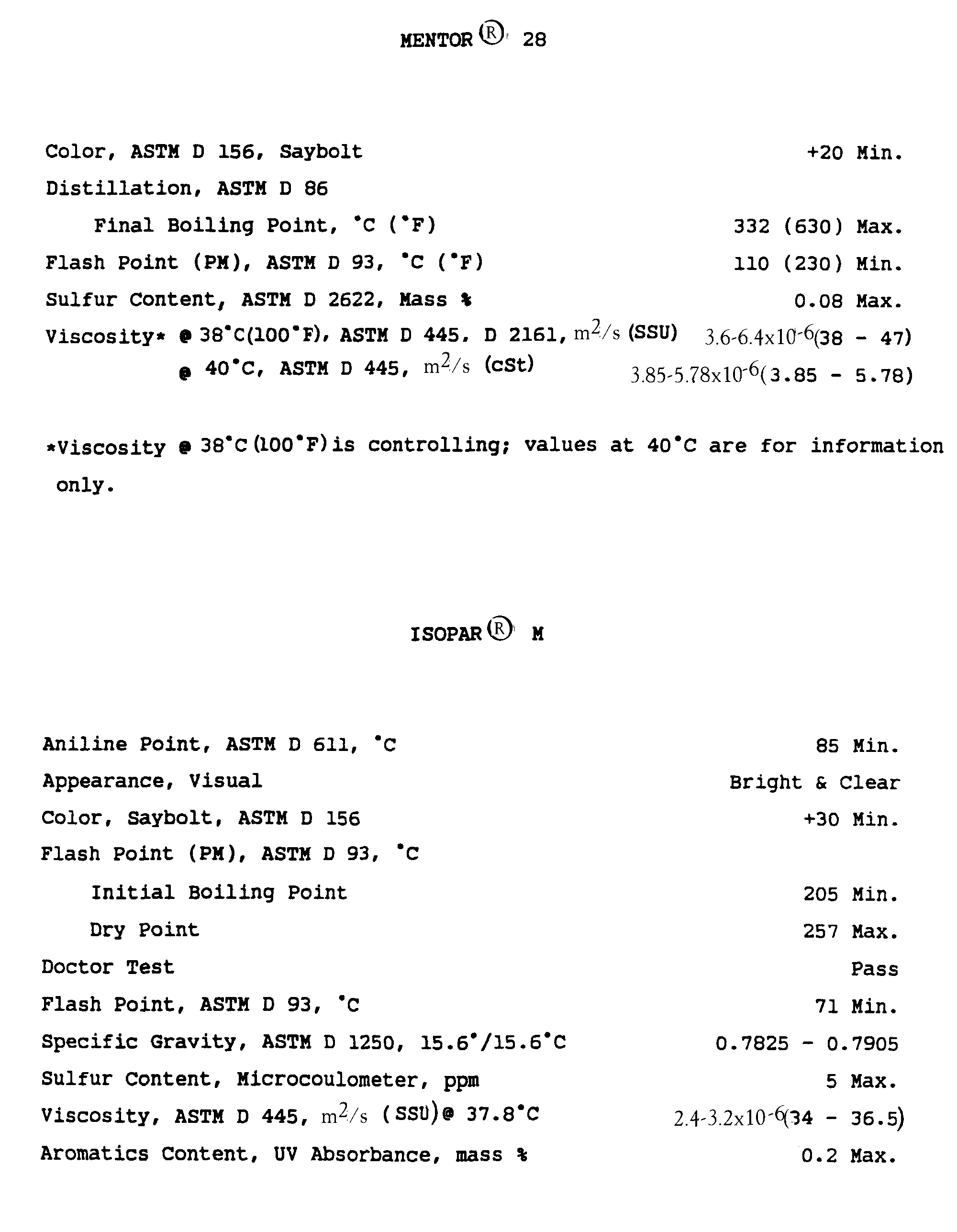

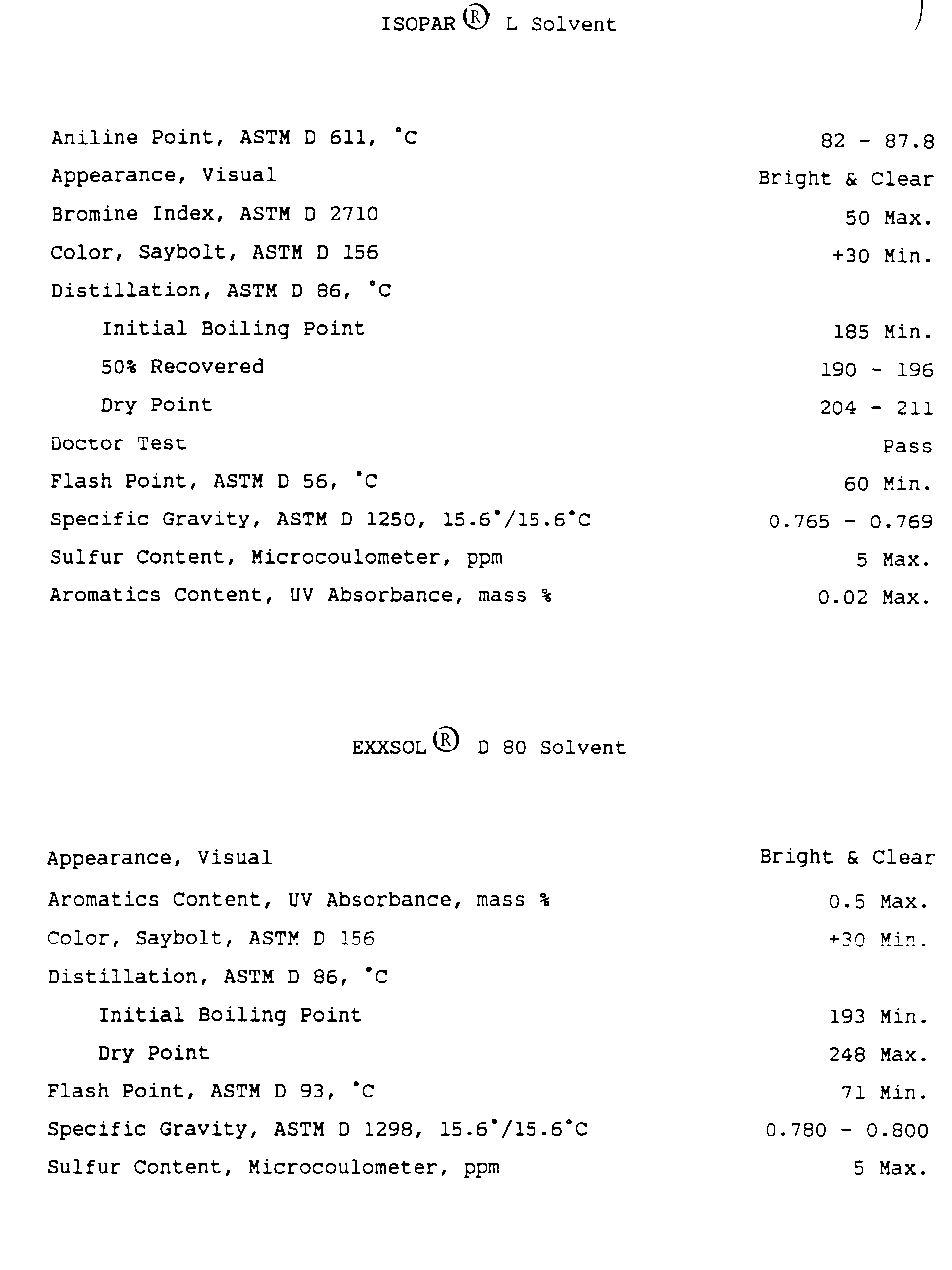

## Claims

1. A surfactant solution of a first surfactant having an hydrophilic-lipophilic balance (HLB) of from 1 to 5 and a second surfactant having an HLB of from 12 to 15 dissolved in a paraffinic, isoparaffinic, or naphthenic hydrocarbon solvent, the mixture of the first surfactant and the second surfactant having an HLB of from 8 to 10.5, wherein the solution has from 2.0 to 60.0 wt.% of the mixture of the first and second surfactants, wherein the weight ratio for the first surfactant to the second surfactant is from 65:35 to from 40:60, and wherein the hydrocarbon solvent is selected from "VARSOL® 18," low odour paraffin solvent ("LOPS"), "MENTOR® 28", "ISOPAR® L", and "EXXSOL® D 80", as defined herein.

2. A surfactant solution as claimed in claim 1 wherein the HLB of the first surfactant is from 1 to 4.

3. A surfactant solution as claimed in claim 1 or 2 wherein the hydrocarbon solvent is "EXXSOL® D 80," and the wt% of the mixture of the first and second surfactants is about 10 wt%.

4. A surfactant solution as claimed in any preceding claim wherein the first surfactant is sorbitan monooleate and the second surfactant is polyoxyethylene (20) sorbitan monooleate.

5. A process for the removal of oil deposited on the surface of an article which comprises the steps of:
(a) contacting the oil deposited on the surface of the article with a sufficient amount of a surfactant solution for a sufficient period of time for the surfactant solution to penetrate the oil; and
(b) washing with water the said oil and the solution of surfactants from the article;
wherein the surfactant solution is as claimed in any preceding claim.

6. A process according to claim 5, further including the step of collecting the mixture of water, oil and surfactant solution which has been washed from the article.

7. A process for the removal of oil deposited on the earthen formation of a shoreline which is abutted from a body of fresh water or sea water which comprises the steps of:
(a) contacting the oil deposited on the earthen formation with a sufficient amount of surfactant solution for a sufficient period of time for the surfactant solution to penetrate the oil;
(b) washing with water the oil and solution of surfactants from the earthen formation into the body of water, the oil and the surfactant solution forming lenses or films on the surface of the body of water; and
(c) removing the films or lenses from the surface of the body of water by a mechanical process;
wherein said surfactant solution is as claimed in any of claims 1 to 4.

8. A composition comprising
(a) oil, and
(b) a surfactant solution as claimed in any of claims 1 to 4

9. Use of a surfactant solution as claimed in any of claims 1 to 4 to remove an oil deposit from a surface.

## Patentansprüche

1. Tensidlösung aus einem ersten Tensid mit einem hydrophil/lipophilen Gleichgewicht (HLB-Wert) von 1 bis 5 und einem zweiten Tensid mit einem HLB-Wert von 12 bis 15, die in einem paraffinischen, isoparaffinischen oder naphthenischen Kohlenwasserstofflösungsmittel aufgelöst sind, wobei die Mischung aus dem ersten Tensid und dem zweiten Tensid einen HLB-Wert von 8 bis 10,5 hat, die Lösung 2,0 bis 60,0 Gew.% der Mischung aus erstem und zweitem Tensid enthält, das Gewichtsverhältnis von dem ersten Tensid zu dem zweiten Tensid 65:35 bis 40:60 beträgt und das Kohlenwasserstofflösungsmittel ausgewählt ist aus "VARSOL® 18", geruchsarmem Paraffinlösungsmittel ("LOPS"), "MENTOR® 28", "ISOPAR® L" und "EXXSOL® D 80", wie hierin definiert.

2. Tensidlösung nach Anspruch 1, bei der der HLB-Wert des ersten Tensids 1 bis 4 beträgt.

3. Tensidlösung nach Anspruch 1 oder 2, bei der das Kohlenwasserstofflösungsmittel "EXXSOL® D 80" ist und der Gewichtsprozentsatz der Mischung des ersten und zweiten Tensids etwa 10 Gew.% beträgt.

4. Tensidlösung nach einem der vorhergehenden Ansprüche, bei der das erste Tensid Sorbitanmonooleat und das zweite Tensid Polyoxyethylen(20)sorbitanmonooleat ist.

5. Verfahren zur Entfernung von auf der Oberfläche eines Gegenstands abgesetztem Öl, bei dem
(a) das auf der Oberfläche des Gegenstands abgesetzte Öl mit einer ausreichenden Menge einer Tensidlösung für eine ausreichende Zeitdauer kontaktiert wird, damit die Tensidlösung das Öl penetriert, und
(b) das Öl und die Lösung der Tenside mit Wasser von dem Gegenstand gewaschen wird,
wobei die Tensidlösung gemäß einem der vorhergehenden Ansprüche ist.

6. Verfahren nach Anspruch 5, bei dem außerdem die Mischung aus Wasser, Öl und Tensidlösung, die von dem Gegenstand gewaschen worden ist, aufgefangen wird.

7. Verfahren zur Entfernung von Öl, das auf der Erdformation einer Küstenlinie abgesetzt ist, die an eine Ansammlung von Süßwasser oder Seewasser stößt, bei dem
(a) das auf der Erdformation abgesetzte Öl mit einer ausreichenden Menge Tensidlösung für eine ausreichende Zeitdauer kontaktiert wird, damit die Tensidlösung das Öl penetriert,
(b) das Öl und die Tensidlösung mit Wasser von der Erdformation in die Wasseransammlung gewaschen werden, wobei das Öl und die Tenside auf der Oberfläche der Wasseransammlung Linsen oder Filme bilden, und
(c) die Filme oder Linsen von der Oberfläche der Wasseransammlung mittels eines mechanischen Verfahrens entfernt werden,
wobei die Tensidlösung gemäß einem der Ansprüche 1 bis 4 ist.

8. Zusammensetzung, die
(a) Öl und
(b) Tensidlösung nach einem der Ansprüche 1 bis 4 umfaßt.

9. Verwendung einer Tensidlösung nach einem der Ansprüche 1 bis 4 zur Entfernung einer Ölablagerung von einer Oberfläche.

## Revendications

1. Solution tensioactive formée d'un premier agent tensioactif ayant un équilibre hydrophile-lipophile (HLB) de 1 à 5 et d'un deuxième agent tensioactif ayant un HLB de 12 à 15, dissoute dans un solvant hydrocarboné paraffinique, isoparaffinique ou naphténique, le mélange du premier agent tensioactif et du deuxième agent tensioactif ayant un HLB de 8 à 10,5, solution dans laquelle la solution contient 2,0 à 60,0 % en poids du mélange du premier et du deuxième agents tensioactifs, le rapport pondéral pour le premier agent tensioactif au deuxième agent tensioactif est de 65:35 à 40:60 et le solvant hydrocarboné est sélectionné parmi le "VARSOL® 18", un solvant paraffinique de faible odeur ("LOPS"), le "MENTOR® 28", l"'ISOPAR® L" et l"'EXXSOL® D 80"), comme défini dans la présente demande.

2. Solution tensioactive selon la revendication 1, dans laquelle le HLB du premier agent tensioactif est de 1 à 4.

3. Solution tensioactive selon la revendication 1 ou 2, dans laquelle le solvant hydrocarboné est "l'EXXSOL® D 80" et le pourcentage en poids du mélange du premier et du deuxième agents tensioactifs est d'environ 10% en poids.

4. Solution tensioactive selon l'une quelconque des revendications précédentes, dans laquelle le premier agent tensioactif est le monooléate de sorbitan et le deuxième agent tensioactif est le monooléate de sorbitan polyoxyéthyléné (20).

5. Procédé d'élimination de l'huile déposée à la surface d'un article, qui comprend les stades suivants:
(a) on met en contact l'huile déposée à la surface de l'article avec une quantité suffisante d'une solution tensioactive pendant une période de temps suffisante pour que la solution tensioactive pénètre dans l'huile, et
(b) on enlève par lavage à l'eau ladite huile et la solution d'agents tensioactifs de l'article,
procédé dans lequel la solution tensioactive est telle que définie dans l'une quelconque des revendications précédentes.

6. Procédé selon la revendication 5, comprenant par ailleurs le stade de collecte du mélange d'eau, d'huile et de solution tensioactive qui a été enlevé par lavage de l'article.

7. Procédé d'élimination de l'huile déposée sur la formation de terre d'un rivage battu par une masse d'eau douce ou d'eau de mer et qui comprend les stades suivants :
(a) on met en contact l'huile déposée sur la formation de terre avec une quantité suffisante d'une solution tensioactive pendant une période de temps suffisante pour que la solution tensioactive pénètre dans l'huile,
(b) on enlève par lavage à l'eau l'huile et la solution d'agents tensioactifs de la formation de terre dans la masse d'eau, l'huile et la solution tensioactive formant des loupes ou films à la surface de la masse d'eau, et
(c) on enlève les films ou les loupes de la surface de la masse d'eau par un procédé mécanique,
procédé dans lequel ladite solution tensioactive est telle que définie dans l'une quelconque des revendications 1 à 4.

8. Composition comprenant :
(a) de l'huile, et
(b) une solution tensioactive selon l'une quelconque des revendications 1 à 4.

9. Utilisation d'une solution tensioactive selon l'une quelconque des revendications 1 à 4 pour éliminer un dépôt d'huile d'une surface.
